**Europäisches Patentamt**

**European Patent Office**

**Office européen des brevets**

(19)

(11) Veröffentlichungsnummer: **0 023 340**
**B2**

(12) **NEUE EUROPÄISCHE PATENTSCHRIFT**

(45) Veröffentlichungstag der neuen Patentschrift:
16.03.88

(51) Int. Cl.⁴: **B 60 V 1/22**

(21) Anmeldenummer: 80104306.4

(22) Anmeldetag: 23.07.80

(54) Stauflügelboot.

(30) Priorität: 31.07.79 DE 2931020

(43) Veröffentlichungstag der Anmeldung:
04.02.81 Patentblatt 81/5

(45) Bekanntmachung des Hinweises auf die Patenterteilung:
28.09.83 Patentblatt 83/39

(45) Bekanntmachung des Hinweises auf die Entscheidung
über den Einspruch:
16.03.88 Patentblatt 88/11

(84) Benannte Vertragsstaaten:
AT BE CH DE FR GB IT LI NL SE

(56) Entgegenhaltungen:
DE-A-1 756 013
DE-A-2 543 716
DE-B-1 813 311
DE-C-405 050
DE-C-430 139
DE-C-1 923 834
FR-A-2 215 340
US-A-2 364 676
US-A-2 364 676
US-A-3 221 831

(73) Patentinhaber: Jörg, Günther W., Odenwaldring 24,
D-6101 Grossbieberau (DE)

(72) Erfinder: Schellhaas, Rolf, Ostlandstrasse 2, D-6101
Grossbieberau (DE)

(74) Vertreter: Schulze, Ilse, Dipl.- Chem.,
Patenanwälte Dipl.- Chem. I. Schulze Dipl.- Ing.
E. Gutscher Gaisbergstrasse 3, D-6900 Heidelberg
(DE)

EP 0 023 340 B2

## Beschreibung

Die Erfindung betrifft ein Stauflügelboot mit zwei im Abstand voneinander und hintereinander in etwa gleicher Höhe an einem Rumpf angeordneten Tragflächen.

Stauflügelboote dieser Art sind seit einiger Zeit bekannt. Beispielsweise werden in der DE-B-1 756 013 und der DE-B-2 303 972 eigenstabile aerodynamische Bodeneffektfahrzeuge nach dem Tandemflügelprinzip beschrieben, bei denen die vordere Tragfläche durch die Stauluft im aerodynamischen Bodeneffekt vorwiegend auftriebsmäßig belastet wird, während die rückwärtige Tragfläche als weniger bodeneffektabhängig flugmechanische Regeleinheit die Schwebehöhe des Fahrzeugs stabilisiert.

Die während der Phase des Flairens (Fliegens) an die Tragflächen von Tandemstauflügelfahrzeugen gestellten Bedingungen machen eine differenzierte Profilgestaltung und Relativanordnung der Flügel nötig. So beschreibt die DE-B-1 756 013 ein Tandembodeneffektfahrzeug, bei dem die vordere Tragfläche als Parallelflügel mit Endscheiben und die hintere Tragfläche als in Richtung der Fahrzeuglängsachse pfeilförmige auslaufender Deltaflügel ausgebildet ist.

In der DE-B-2 303 972 sind die Tragflächen als im Abstand von etwa einer halben Profiltiefe angeordnete Parallelflügel ausgeführt, deren Profile entsprechend der vorwiegend tragenden bzw. stabilisierenden Funktion derart gestaltet sind, daß der Vorderflügel auftriebsmäßig vor allem von der Druckseite, der Hinterflügel dagegen hauptsächlich von der Sogseite belastet ist.

Tandemstauflügelfahrzeuge nach den genannten Prinzipien und Ausführungsformen haben sich in der praktischen Erprobung ausgezeichnet bewährt. Während aber in der bisherigen Forschung und Entwicklung von Bodeneffektfahrzeugen naturgemäß die Phase des Flairens im Vordergrund des Interesses stand, blieben sich vor allem in der Startphase von Wassefahrzeugen stellende Probleme bisher ohne befriedigende Lösung.

Um während des Startvorgangs vor dem Abwassern ein Maximum an Auftrieb zu erzielen, müssen sich die Tragflächen von Stauflügelbooten möglichst dicht über der Wasseroberfläche bewegen. Diese Bedingung wird am besten durch ein Aufschwimmen des Fahrzeugs auf seinen Tragflächen erreicht. Stauflügelboote müssen allemal, wenn sie effizient flairen sollen, mit den Tragflächen im Wasser schwimmen, bevor sie zum Starten abwassern. Das Aufschwimmen mit den im Hinblick auf die Phase des Flairens differenziert gestalteten Tragflügelprofilen führt aber bei Stauflügelbooten nach dem Stand der Technik dazu, daß die Bugpartie in Ruhelage tiefer einschwimmt als die Heckpartie. Dadurch wird der Beginn der Startphase behindert, da das Flugboot bei kleiner Fahrt zum Unterschneiden neigt. Weiterhin wird bei den bekannten Ausführungsformen der rückwärtigen Tragflächen das Gleiten auf der Wasseroberfläche in der Startphase dadurch erschwert, daß ein großflächiger Kontakt des hinteren Flügels mit dem Wasserspiegel besteht. Die Gleitbewegung wird insbesondere durch den Wasserwiderstand an der Hinterkante des rückwärtigen Flügels gehemmt, die beispielsweise bei der Ausführungsform gemäß der DE-B-2 303 972 über die volle Länge im Wasser liegt.

Um das Flugboot in allen Bewegungsphasen (Schwimmen, Gleiten, Flairen) und bei allen Geschwindigkeiten gut steuerbar zu machen, ist es erforderlich, daß die Antriebsluftschraube in einem Spalt zwischen Seitenleitwerksflosse und Seitenruder läuft, um das Seitenruder einem ständigen starken Luftstrom auszusetzen. Eine derartige Anordnung der Luftschraube ist nach dem Stand der Technik bekannt, birgt aber den Nachteil in sich, daß durch die Spaltwirkung verstärkt Propellerlärm erzeugt wird.

Aufgabe der Erfindung ist es, durch konstruktive Maßnahmen einerseits den Wasserwiderstand des Stauflügelbootes in der Gleitphase zu vermindern und die Schwimmlage des Flugbootes derart zu verbessern, daß ein optimaler Anstellwinkel des Flugbootes relativ zu der Wasseroberfläche erreicht und ein Unterschneiden wirkungsvoll verhindert wird, und andererseits die Geräuschemission der Luftschraube gegenüber bekannten Konstruktionen wesentlich zu dämpfen.

Diese Aufgabe wird gemäß Anspruch 1 durch ein Stauflügelboot der eingangs genannten Art gelöst, das dadurch gekennzeichnet ist, daß die Tragflächen als in Kammern segmentierte Hohlkörper mit Zwischenschotten ausgestaltet sind, wobei ein Teil der Kammern mit Flutungs- und Lenzeinrichtungen versehen ist und die in Fahrtrichtung gesehen rückwärtige Tragfläche aus nicht flutbaren Schwimmkammern und mindestens einer mit Ballastwasser beaufschlagbaren Trimmkammer besteht, und daß die Hinterkante der rückwärtigen Tragfläche polygonal oder abgerundet ausgebildet ist, derart, dass in der Schwimmlage der mittlere Teil dieser Tragfläche tiefer ins Wasser eintaucht als die Aussenbereiche.

Zur Geräuschminderung ist gemäß Anspruch 10 die zum Antrieb vorgesehene Luftschraube in einem Spalt zwischen einer Seitenleitwerksflosse und einem Seitenruder angeordnet, der in der Laufebene der Luftschraube in einer radialen Außenzone gegenüber der achsnahen Innenzone verbreitert ist.

Zweckmäßige Weiterbildungen des Stauflügelbootes sind in den übrigen Unteransprüchen gekennzeichnet.

Die erfindungsgemäße Verbesserung der Schwimmlage des Stauflügelbootes wird also zunächst durch eine Aufgliederung der Tragflächen in Schwimm- und Trimmkammern erreicht. Eine günstige Ausführungsform besteht darin, eine Trimmkammer in der Mittelpartie der ruckwädigen Tragfläche vorzusehen und die Seitenteile als Schwimmkammern auszugestalten. In dieser Ausführung bewirkt die polygonale oder abgerundete Formgebung der Tragflächenhinterkante eine Verkleinerung der Schwimmkammern und damit eine Verringerung des Auftriebs, wodurch ebenso wie durch das Fluten der Trimmkammer ein tieferes Einschwimmen des Flugboothecks erreicht wird. Durch die Verkleinerung des hinteren Tragflügels zusammen mit der Ausgestaltung einer Trimmkammer wird eine bessere Ausgangsstartlage erreicht. Die erfindungsgemäße polygonale oder abgerundete Gestaltung der rückwärtigen Tragfläche mit einer im Außenbereich nach vorne hin abgewinkelten Hinterkante verringert zudem den Wasserwiderstand des Flugbootes in der Gleitphase, da nach dem Anheben des Flügels während des Startvorgangs in dem Außenbereich keine direkte Wasserberührung mehr stattfindet, zugleich aber eine maximale Stauwirkung beibehalten wird.

Die vorgesehene Trimmkammer kann vor dem Start durch einen verstellbaren Schieber regelbar geflutet werden, um entsprechend der Nutzlastverteilung ein optimales Eintauchen des Flugboothecks und einen möglichst günstigen Anstellwinkel für den Stadvorgang zu erreichen. Da das zum Trimmen aufgenommene Wasser während des Flairens einen unnötigen Ballast darstellt, sollte der sich bei Beschleunigung zuerst aus dem Wasser hebende hintere Tragflügel nach Möglichkeit noch in der Gleitphase vor dem Abwassern gelenzt werden. Dies kann durch sinnvoll in dem Flügelmittelstück nahe der Wasserlinie angebrachte Öffnungen geschehen.

Zusätzlich zu den Trimmkammern in den Tragflächen können auch im Rumpfbereich des Stauflügelboots eine oder mehrere Trimmkammern vorgesehen sein. Diese können ebenso wie die Kammern in den Tragflächen durch Schieber in der Größe verstellt und durch Öffnungen nahe der Wasserlinie geflutet und gelenzt werden.

Die erfindungsgemäß vorgeschlagene Schottbauweise für die Tragflächen stellt bei Verletzungen des Bootskörpers einen zusätzlichen Sicherheitsfaktor dar. Es ist daher sinnvoll, auch den vorderen Tragflügel in Gestalt unabhängiger Schwimmkammern auszulegen, selbst wenn keine Trimmkammer zur Verbesserung der Wasserlage vorgesehen sein sollten. Durch die segmentierte Bauweise ist es außerdem möglich, die Tragflächen in Einzelteile zu zerlegen, was Transport und Montage wesentlich erleichtert. Erfindungsgemäß wird insbesondere vorgeschlagen, die äußeren Schwimmkammern der Tragflächen mit Scharnieren an die Rumpfkonstruktion anzulenken und hochklappbar zu gestalten, um auch bei größeren Flugbooten die für Kraftfahrzeug- und Bahntransport praktikablen Breiten einzuhalten.

Die Segmentierung der Tragflächen kann durch eine wabenartige Abschottung einzelner Kammern erreicht werden. In einer noch einfacheren und gewichtssparenderen Anordnung sind in den Tragflächen flexible, luftgefüllte Kunststoffsäcke angeordnet, die unabhängige Schwimmkörper bilden. Der Innenraum der Schwimmkammern kann vollständig von aneinander anliegenden Luftsäcken eingenommen werden. Die Trimmkammern sind dagegen nur zum Teil mit Luftsäcken gefüllt, so daß der Zwischenraum zwischen den Luftsäcken ein mit Wasser beaufschlagbares Flutungs- und Lenzvolumen bildet. Die Größe dieses Volumens kann durch Befüllen oder Entleeren der Luftsäcke pneumatisch veränden werden.

Als Ursache der starken Geräuschentwicklung einer in einem Laufspalt zwischen Seitenleitwerksflosse und Seitenruder angeordnete Luftschraube wurde die Tatsache erkannt, daß bei den bisherigen Konstruktionen der Laufspalt parallele Kanten aufweist, während die Bahngeschwindigkeit der Propellerblätter und damit die Strömungsgeschwindigkeit der Luft von der Propellernabe nach außen hin zunimmt. Durch die Maßnahme, den Laufspalt diesem Geschwindigkeitsprofil angepaßt in seiner radialen Außenzone gegenüber der radialen Innenzone zu erweitern, wird eine erhebliche Geräuschdämpfung erreicht. Die guten Steuerungseigenschaften der beschriebenen Luftschreubenanordnung werden dabei nicht beeinträchtigt, da gegenüber früheren Ausführungsformen die Gesamtlänge des Laufspalts kleiner oder nur geringen Änderungen unterliegt.

Die Erfindung wird anhand einer in den Zeichnungen dargestellten Ausführungsform näher erläutert. Es zeigt

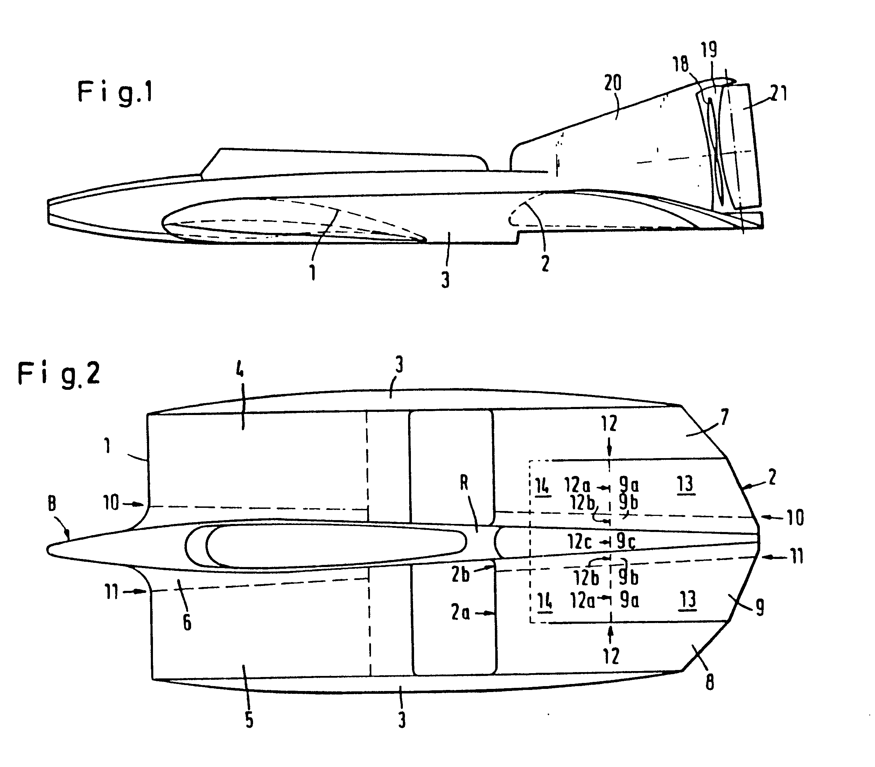

Fig. 1 eine Seitenansicht eines Stauflügelbootes,

Fig. 2 eine Draufsicht des Stauflügelbootes gemäß Fig. 1, und

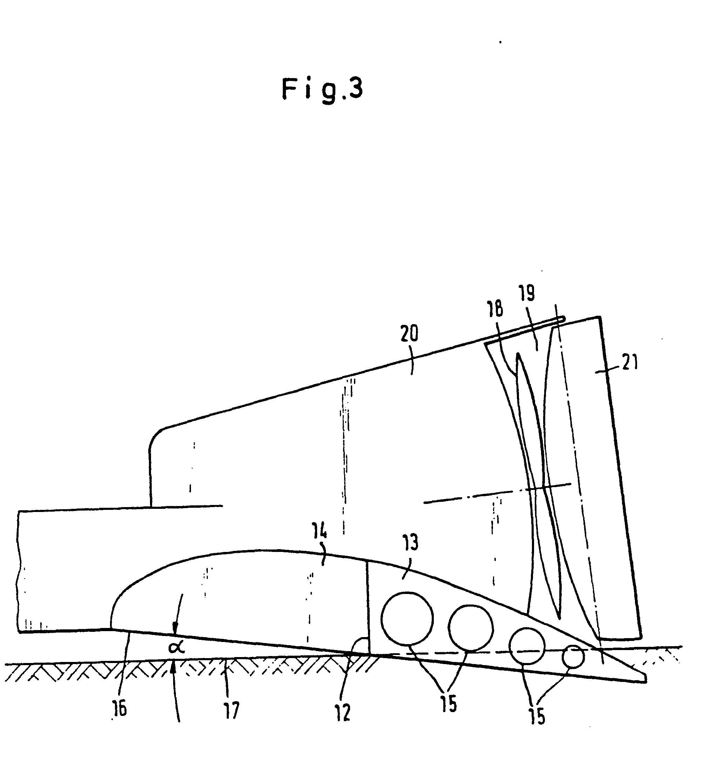

Fig. 3 eine Seitenansicht der im Wasser einschwimmenden Hecktrimmkammer des Stauflügelbootes.

Der dargestellte Bodeneffektflugkörper weist einen Rumpf R, eine vordere Tragfläche 1 und eine hintere Tragfläche 2 auf, die im Abstand voneinander und hintereinander in etwas gleicher Höhe angeordnet und durch Endscheiben 3 miteinander verbunden sind. Die vordere Tragfläche 1 besteht aus zwei äußeren Schwimmkammern 4, 5 und einer inneren Schwimmkammer 6. Die äußeren Schwimmkammern 4, 5 sind gegen die innere Schwimmkammer 6 doppelwandig abgeschottet und an den Abschottungskanten 10 und 11 an die Rumpfpartie des Stauflügelboots derart angelenkt daß sie für Transportzwecke nach oben gestellt werden können. Ebenso ist die hintere Tragfläche 2 in einen inneren Tragflächenabschnitt 2b und zwei dazu

doppelwandig abgeschottete, äußere Tragflächenabschnitte 2a geteilt, die an den Abschottungskanten 10 und 11 hochklappbar angelenkt sind. Im Heckbereich des Stauflügelboots sind zudem zwei äußere Schwimmkammern 7, 8 und eine mittlere Trimmkammer 9 abgeteilt. Diesen Hecktrimmkammer 9 ist durch ein verstellbares Schott 12 in eine mit Wasser beaufschlagbare Ballastkammer 13 und einen nicht gefluteten Bereich 14 geteilt. Die Ballastkammer 13 kommuniziert mit dem Wasser über eine Reihe von Öffnungen 15, die ein Fluten und in der Gleitphase ein rasches Lenzen des Wasserballasts bewirken. Je nach Stellung des Verschiebeschotts 12 füllt sich in der Schwimmlage ein bestimmtes Volumen der Hecktrimmkammer 9 mit Wasser, was zu einem mehr oder weniger tiefen Einsinken der Hinterkante des Tragflügels 2 führt. Die Eintauchtiefe des rückwärtigen Tragflügels 2 bestimmt ihrerseits den Anstellwinkel α der Flügelunterseite 16 in bezug zu der Wasserobefläche 17. Durch Verschieben des Schotts 12 kann also ein für den Start optimaler Anstellwinkel α vorgegeben werden.

Die Hecktrimmkammer 9 besteht im einzelnen aus einer Rumpftrimmkammer 9c mit einem verstellbaren Schott 12c, zwei in dem inneren Tragflächenabschnitt angeordneten, inneren Flügeltrimmkammern 9b mit verstellbaren Schotten 12b und zwei in den äußeren Tragflächenabschnitten 2a angeordneten, äußeren Flügeltrimmkammern 9a mit verstellbaren Schotten 12a. Die Schotten 12a, 12b, 12c können miteinander gekoppelt oder unabhängig voneinander einzeln verschiebbar sein.

Eine weitere Rumpftrimmkammer kann in der Bugspitze B des Stauflügelboots vorgesehen sein (nicht dargestellt).

Durch die polygonale oder abgerundete Gestaltung der Hinterkante des rückwärtigen Tragflügels 2 werden einerseits die Schwimmkammern 7 und 8 zur Verbesserung der Schwimmlage des Flugbootes verkleinert, andererseits auch die Länge der während der Gleitphase mit der Wasserobefläche im Kontakt stehenden Flügelkante im wesentlichen auf den zwischen den Abschottungskanten 10 und 11 liegenden Bereich verkürzt. Die verminderte Wasserreibung führt so zu einem im Vergleich mit früheren Stauflügelbootkonstruktionen wesentlich verbesserten Gleitverhalten.

Die für den Antrieb verwendete Luftschraube 18 des Flugbootes ist zwischen einer Seitenleitwerksflosse 20 und einem Seitenruder 21 in einem Spalt 19 angeordnet, der efindungsgemäß in der Laufebene der Luftschraube 18 in seiner radialen Außenzone gegenüber der achsnahen Innenzone verbreiten ist. In der Laufebene der Luftschraube 18 ist demnach der Spalt 19 in seiner seitlichen Projektion als bikonkaver Ausschnitt in der Seitenleitwerksflosse 20 gestaltet. Durch diese im Nabenbereich der Luftschraube 18 vorgesehene Verengung des Luftraumes in dem für die Luftschraube 18 vorgesehenen Spalt 19 und durch die Konturierung der den Spalt 19 begrenzenden Kanten wird die Strömungsgeschwindigkeit der Luft derart gesteuert, daß eine wesentliche Lärmdämpfung erreicht wird, ohne daß aber dabei die Arbeit der Luftschrauben 18 selbst in irgendeiner Weise beeinträchtigt wird.

## Patentansprüche

1. Stauflügelboot mit zwei im Abstand voneinander und hintereinander in etwa gleicher Höhe an einem Rumpf (R) angeordneten Tragflächen (1, 2), dadurch gekennzeichnet, daß die Tragflächen (1, 2) als in Kammern (4 bis 9; 9a, 9b) segmentierte Hohlkörper mit Zwischenschotten ausgestaltet sind, wobei ein Teil der Kammern mit Flutungs- und Lenzeinrichtungen versehen ist und die in Fahrtrichtung gesehene rückwärtige Tragfläche (2) aus nicht flutbaren Schwimmkammern (7, 8) und mindestens einer mit Ballastwasser beaufschlagbaren Trimmkammer (9; 9a, 9b) besteht, und daß die Hinterkante der rückwärtigen Tragfläche (2) polygonal oder abgerundet ausgebildet ist, derart, daß in der Schwimmlage der mittlere Teil dieser Tragfläche (2) tiefer ins Wasser eintaucht als die Außenbereiche.

2. Stauflügelboot näch Anspruch 1, dadurch gekennzeichnet, daß die in Fahrtrichtung gesehen rückwärtige Tragfläche (2) aus zwei äußeren, nicht flutbaren Schwimmkammern (7, 8) und mindestens einer mittleren, mit Ballastwasser beaufschlagbaren Trimmkammer (9; 9a, 9b) besteht.

3. Stauflügelboot nach Anspruch 1 und 2, dadurch gekennzeichnet, daß die Trimmkammer (9; 9a, 9b) vermittels mindestens eines einstellbaren Zwischenschotts (12; 12a, 12b) regelbar flutbar ist.

4. Stauflügelboot nach einem der Ansprüche 1 bis 3, dadurch gekennzeichnet, daß im Rumpf (R) mindestens eine Rumpftrimmkammer (9c) vorgesehen ist, die vermittels mindestens eines einstellbaren Zwischenschottes (12c) regelbar flutbar ist.

5. Stauflügelboot nach einem der Ansprüche 2 bis 4, dadurch gekennzeichnet, daß zum Fluten und in der Startphase zum Lenzen die Trimmkammer (9; 9a, 9b, 9c) mit nahe der Schwimmwasserlinie (17) angeordneten Öffnungen (15) versehen ist.

6. Stauflügelboot nach einem der Ansprüche 1 bis 5, dadurch gekennzeichnet, daß die in Fahrtrichtung gesehen vordere Tragfläche (1) unter Bildung von nicht flutbaren Schwimmkammern (4, 5 und 6) abgeschottet ist.

7. Stauflügelboot nach einem der Ansprüche 1 bis 6, dadurch gekennzeichnet, daß die gegeneinander abgeschotteten Tragflächensegmente einzeln aneinander oder an einer Rahmenkonstruktion montierbar sind.

8. Stauflügelboot nach einem der Ansprüche 1 bis 7, dadurch gekennzeichnet, daß die äußeren Tragflächensegmente (2a, 4, 5) aufklappbar an den Rumpfbereich angelenkt sind.

9. Stauflügelboot nach Anspruch 4, dadurch gekennzeichnet, daß die Kammern (4 bis 9; 9a, 9b) der Tragflächen (1, 2) und die Rumpftrimmkammer (9c) ganz oder zum Teil von flexiblen, luftgefüllten Kunststoffsäcken eingenommen werden.

10. Stauflügelboot nach einem der vorhergehenden Ansprüche, das zum Antrieb eine Luftschraube (18) aufweist, dadurch gekennzeichnet, daß die Luftschraube (18) in einem Spalt (19) zwischen einer Seitenleitwerksflosse (20) und einem Seitenruder (21) angeordnet ist, der in der Laufebene der Luftschraube (18) in seiner radialen Außenzone gegenüber der achsnahen Innenzone verbreitert ist.

11. Stauflügelboot nach Anspruch 10, dadurch gekennzeichnet, daß der Spalt (19) in der Laufebene der Luftschraube (18) zwischen Seitenleitwerksflosse (20) und Seitenruder (21) als in seitlicher Projektion bikonkaver Ausschnitt im Seitenleitwerk (20) gestaltet ist.

## Claims

1. A surface-effect aerofoil boat having two aerofoils (1, 2) arranged in spaced relation and in tandem at approximately the same height on a body (R), characterized in that the aerofoils (1, 2) are formed as hollow bodies being segmented into compartments (4 to 9, 9a, 9b) with bulkheads, whereby some of the compartments are provided with flooding and emptying means, and the rear aerofoil seen in driving direction comprises non-floodable flotation compartments (7, 8) and at least one trimming compartment (9; 9a, 9b) to and from which ballast water may flow, and that the trailing edge of the rear aerofoil (2) having a polygonal or rounded-off configuration, so that in floating position of the boat the central portion of said aerofoil (2) is deeper immersed in the water than the outer portions thereof.

2. A surface-effect aerofoil boat as claimed in claim 1, characterized in that the rear aerofoil (2), seen in driving direction, comprises two outer non-floodable flotation compartments (7, 8) and at least one intermediate trimming compartment (9; 9a, 9b) to and from which ballast water may flow.

3. A surface-effect aerofoil boat as claimed in claims 1 and 2, characterized in that the trimming compartment (9; 9a, 9b) being adjustable by at least one adjustably movable bulkhead (12; 12a, 12b).

4. A surface-effect aerofoil boat as claimed in one of the claims 1 to 3, characterized in that the body (R) comprises at least one body trimming compartment (9c) which is controllably floodable by at least on adjustably movable bulkhead (12c).

5. A surface-effect aerofoil boat as claimed in one of the claims 2 to 4, characterized in that the trimming compartment (9; 9a, 9b, 9c) is provided with openings (15) adjacent the float water surface (17) for flooding and for emptying during the sli-ding phase.

6. A surface-effect aerofoil boat as claimed in one of the claims 1 to 5, characterized in that the front aerofoil (1), seen in driving direction, is bulkheaded to form nonfoodable flotation compartments (4, 5 and 6).

7. A surface-effect aerofoil boat as claimed in one of the claims 1 to 6, characterized in that the segments of the aerofoils which are separated by bulkheads are mounted individually together or on a frame structure.

8. A surface-effect aerofoil boat as claimed in one of the claims 1 to 8, characterized in that the outer aerofoil segments (2a, 4, 5) are hinged at the body and upwardly foldable.

9. A surface-effect aerofoil boat as claimed in claim 4, characterized in that the compartments (4 to 9; 9a, 9b) of the aerofoils (1, 2) and the body trimming compartment (9c) are completely of or partially occupied by flexible, air filled bags of plastic material.

10. A surface-effect aerofoil boat as claimed in one of the preceding claims and comprises a propulsion-screw (18), characterized in that the propulsion-screw (18) is mounted in a gap (19) between a vertical fin (20) and an aerodynamic rudder (21), said gap having a geometry which in the plane of rotation of the propulsion-screw (18) is wider in its radial outer sections than its inner section adjacent the axis.

11. A surface-effect aerofoil boat as claimed in claim 10, characterized in that the gap (19) in the plane of rotation of the propulsion-screw (18) between the vertical fin (20) and the aerodynamic rudder (21) is designed as a bi-concave recess in the aerodynamic rudder (20), seen in lateral projection.

## Revendications

1. Bateau volant pourvu d'ailes de sustenation, avec deux surfaces portantes espacées (1, 2), disposees l'une derrière l'autre, sensiblement à la même hauteur sur une coque (R), bateau caractérisé en ce que les surfaces portantes (1, 2) sont constituées sous la forme de corps creux segmentés en chambres (4 à 9, 9a, 9b) avec des cloisons séparatrices, une partie de ces chambres étant pourvue d'installations d'entrée d'eau et de vidange, face au courant d'air, et la surface portante (2) qui est postérieure en direction de la marche, se compose de chambres de flottaison (7, 8), non accessibles au remplissage par l'eau, et d'au moins une chambre d'orientation (9; 9a, 9b) qui peut être chargée avec de l'eau de ballast, et en ce que le bord arrière de la surface portante postérieure (2) étant de forme polygonale ou arrondie, de telle sorte que, dans la position de flottaison du bateau, la portion médiane de cette surface portante (2) soit immergée plus profondément dans l'eau que les autres portions extérieures de cette surfaces portante (2).

2. Bateau volant à ailes de sustentation suivant la revendication 1, caractérisé en ce que la surface portante (2) qui est postérieure en direction de la marche, se compose de deux chambres de flottaison extérieures (7, 8), non accessibles au remplissage par l'eau, et d'au moins une chambre médiane d'orientation (9, 9a, 9b) qui peut être chargée avec de l'eau de ballast.

3. Bateau volant suivant l'une des revendications 1 et 2, caractérisé en ce que la chambre d'orientation (9, 9a, 9b) est réglable dans son remplissage par l'eau, au moyen d'au moins une cloison intermédiaire (12, 12a, 12b) de position réglable.

4. Bateau volant suivant l'une quelconque des revendications 1 à 3, caractérisé en ce que, dans le corps de coque (R) est prévue au moins une chambre d'orientation de coque (9c) qui est réglable, dans son remplissage par l'eau, au moyen d'au moins une cloison intermédiaire réglable (12c).

5. Bateau volant suivant l'une quelconque des revendications 2 à 4, caractérisé en ce que, pour le remplissage d'eau et, dans la phase de démarrage, pour sa vidange, la chambre d'orientation (9; 9a, 9b, 9c) est pourvue d'ouvertures (15) disposées au voisinage de la ligne de flottaison (17).

6. Bateau volant suivant l'une quelconque des revendications 1 à 5, caractérisé en ce que la surface portante antérieure (1) dans la direction de la marche, est cloisonnée avec formation de chambres de flotteur (4, 5 et 6).

7. Bateau volant suivant l'une quelconque des revendications 1 à 6, caractérisé en ce que les segments de surface portante cloisonnée l'un par rapport à l'autre, peuvent être montés individuellement ou dans une construction avec cadre.

8. Bateau volant suivant l'une quelconque des revendications 1 à 7, caractérisé en ce que les segments de surface portante (2a, 4, 5) les plus extérieurs sont articulés à charnière, rabattables vers le haut, sur la zone de coque.

9. Bateau volant suivant la revendication 4, caractérisé en ce que les chambres (4 à 9; 9a, 9b) des surfaces portantes (1, 2) et la chambre d'orientation de coque (9c) sont constituées, en tout ou partie, par des sacs de matière synthétique, flexibles, remplis d'air.

10. Bateau volant suivant l'une quelconque des revendications 1 à 9, qui est pourvu, pour son entraînement, d'une hélice aérienne (18), bateau caractérisé en ce que l'hélice aérienne (18) est disposée dans une fente (19) formée entre un aileron latéral de direction (20) et un gouvernail latéral (21) cette fente allant, dans le plan de circulation de l'hélice, en s'élargissant dans sa zone radiale extérieure par rapport à sa zone intérieure voisine de l'axe.

11. Bateau volant suivant la revendication 10, caractérisé en ce que la fente (19) est formée, dans le plan de circulation de l'hélice (18), entre l'aileron de direction latéral (20) et le gouvernail (21), par un découpage bi-concave en projection latérale dans l'aileron de direction latéral (20).

Fig.1

Fig.2

# Fig.3